(19) Europäisches Patentamt / European Patent Office / Office européen des brevets

(11) **EP 3 581 764 B1**

(12) **EUROPEAN PATENT SPECIFICATION**

(45) Date of publication and mention
of the grant of the patent:
**22.02.2023 Bulletin 2023/08**

(21) Application number: **17895575.3**

(22) Date of filing: **10.10.2017**

(51) International Patent Classification (IPC):
*F01D 5/28* (2006.01)    *F04D 29/32* (2006.01)
*F02C 7/00* (2006.01)    *F04D 29/38* (2006.01)
*B64C 11/26* (2006.01)    *F01D 5/14* (2006.01)
*F01D 21/08* (2006.01)

(52) Cooperative Patent Classification (CPC):
**F01D 5/147; F01D 5/282; F01D 21/08;**
**F04D 29/324; F04D 29/38;** B64C 11/26;
F01D 5/148; F05D 2220/36; F05D 2240/303;
F05D 2300/501; Y02T 50/60

(86) International application number:
**PCT/JP2017/036669**

(87) International publication number:
**WO 2018/146862 (16.08.2018 Gazette 2018/33)**

(54) **FAN BLADE**

GEBLÄSESCHAUFEL

PALE DE SOUFFLANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2017 JP 2017021325**

(43) Date of publication of application:
**18.12.2019 Bulletin 2019/51**

(73) Proprietor: **IHI Corporation
Tokyo 135-8710 (JP)**

(72) Inventors:
• **OHBO Akane
Tokyo 135-8710 (JP)**
• **YAGI Hiroyuki
Tokyo 135-8710 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 1 302 562      WO-A1-2014/143265
JP-A- S5 791 398      JP-A- 2003 278 502
JP-A- 2010 038 156      US-A1- 2014 093 367
US-A1- 2016 201 482      US-A1- 2016 201 482**

## Description

## Technical Field

The present disclosure relates to a fan blade of a turbofan engine for an aircraft, and particularly relates to a fan blade made of a composite material.

## Background Art

A turbofan engine for an aircraft is composed of a fan, and a core engine disposed coaxially with the fan behind the fan, and including a turbine for driving the fan.

The fan includes a substantially cylindrical fan case, and a fan disk formed to rotate inside the fan case, and a plurality of fan blades mounted on a circumference of the fan disk. The fan disk is rotationally driven by a low pressure turbine connected through a shaft.

During operation of the turbofan engine, the fan blades rotate together with the fan disk, so that air is sucked by the fan. A part of the air flows into the core engine, high-temperature and high-pressure gas for driving the low pressure turbine is generated, and remaining air bypasses the core engine to be discharged from the back, and contributes to generation of most of thrust.

Conventionally, fan blades made of titanium alloy have mainly been used for the fan blades of the turbofan engine for an aircraft. However, fan blades made of a composite material such as FRP (Fiber Reinforced Plastics) are often used recently.

The composite material has larger specific strength (value obtained by dividing tensile strength by density) than the titanium alloy, and therefore the material of the fan blades can be changed from the titanium alloy to the composite material to reduce weight while maintaining the strength.

On the other hand, the composite material is inferior to the titanium alloy in wear resistance and shock resistance. When a foreign object such as sand grains and a small stone is mixed into air sucked by the fan, the foreign object collides with airfoils of the fan blades. In a case in which the airfoils are composed of a composite material, there is a possibility of causing damage (FOD (Foreign Object Damage)).

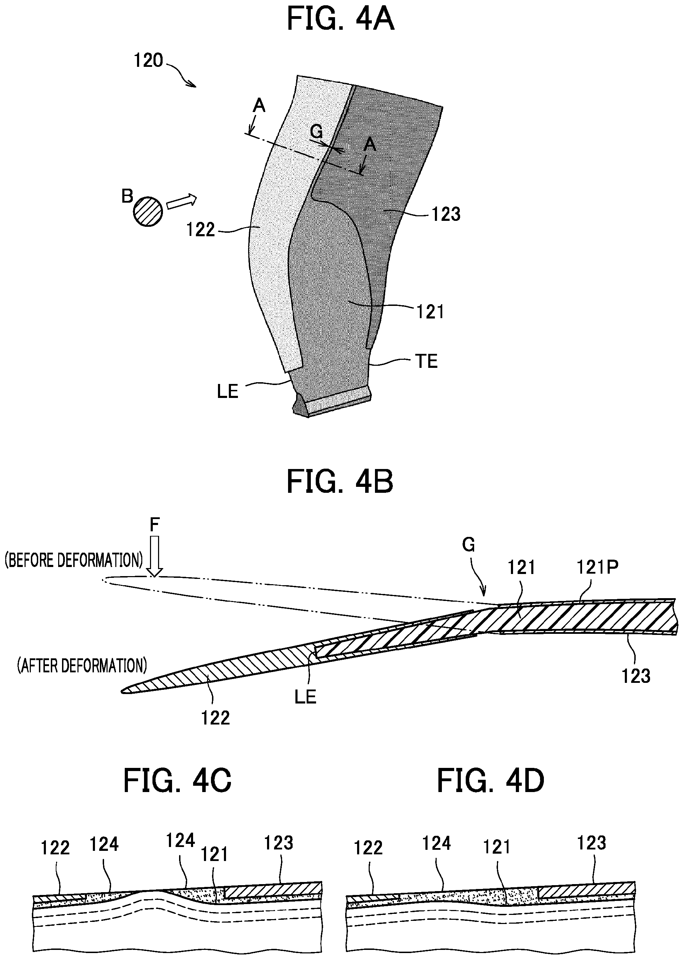

Therefore, in a conventional fan blade 120 made of a composite material, as illustrated in FIG. 4A, a leading edge part LE of an airfoil body 121 made of a composite material that is highly likely to collide with a foreign object is covered with a sheath 122 made of metal, so that damage is prevented from being caused (refer to Patent Document 1).

When the fan sucks a large foreign object such as a bird, the airfoil of the fan blade is largely deformed by collision with the foreign object. The deformation starts as a bending deformation in the leading edge part, and thereafter spreads to other regions. The trailing edge part of the airfoil is a portion in which large distortion is likely to occur on a surface by propagated deformation. In a case in which the airfoil is composed of a composite material, there is a high possibility of causing a crack or peeling.

Therefore, as illustrated in FIG. 4A, in the conventional fan blade 120 made of a composite material, a portion of a trailing edge part TE of the airfoil body 121 made of a composite material where large distortion is expected to occur on a surface by deformation at the time of collision with a foreign object is protected by covering with a guard 123 made of metal. Consequently, the strength of the trailing edge part of the airfoil is improved, and occurrence of a crack or peeling is avoided (refer to Patent Document 1).

Thus, in the conventional fan blade made of a composite material, in order to improve wear resistance and shock resistance, the leading edge part of the airfoil made of a composite material is covered with the sheath made of metal, and the trailing edge part is covered with the guard made of metal.

Patent Document 2 discloses a method for removing metal cladding from an airfoil substrate made of a composite material containing a reinforcement such as tapes, fibers or particles supported in a minder or matrix material. Further examples of airfoils are described in Patent Documents 3 to 5.

## Related Art Document

## Patent Document

Patent Document 1: Specification of U.S. Patent No. 7,780,410
Patent Document 2: EP 1 302 562 A1
Patent Document 3: WO 2014/143 265 A1
Patent Document 4: US 2014/093 367 A1
Patent Document 5: US 2016/201 482 A1

## Summary of the Invention

## Problems to be solved by the Invention

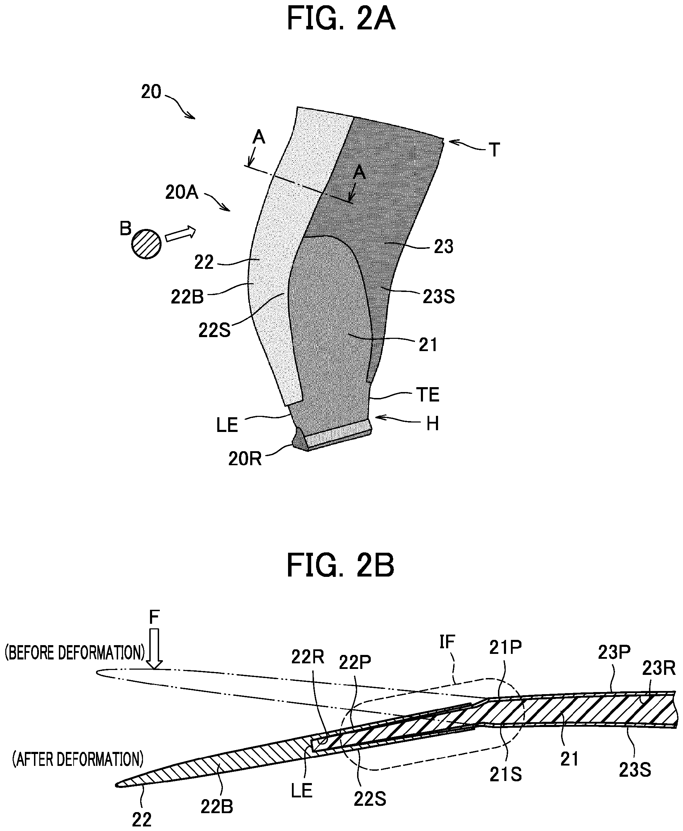

In the fan blade made of a composite material ("fan blade assembly 114") described in Patent Document 1, the leading edge part of the airfoil ("airfoil 154") made of a composite material is covered with the sheath made of metal ("metal leading edge 158"), and the trailing edge part is covered with the guard ("trailing edge guard 156" and "blade tip cap 150") made of metal (refer to FIG. 2).

Patent Document 1 does not describe a configuration of an interface part of the sheath and the guard, more specifically, how the rear end part (rear end and a portion in the vicinity thereof) of the sheath and the front end part (front end and a portion in the vicinity thereof) of the guard are arranged.

However, the sheath made of metal and the guard made of metal are bonded to the airfoil body made of a composite material by an adhesive, and therefore it is considered that the rear end part of the sheath and the front end part of the guard might be disposed so as not to overlap on each other in consideration of dimensional tolerance at the time of manufacturing of the both. That is, it is considered that a clearance G exists between the rear end of the sheath 122 and the front end of the guard 123 having nominal (standard) shapes on design, as illustrated in FIG. 4A.

Thus, when a large foreign object B collides with the fan blade 120 in a case in which the clearance G exists between the rear end of the sheath 122 and the front end of the guard 123, the airfoil body 121 is bent in such a way that the bending occurs at a portion in which the clearance G exists, due to an action of bending load F caused by the collision with the foreign object B, as illustrated in FIG. 4B being an A-A sectional view in FIG. 4A. Consequently, the fan blade 120 is highly likely to be damaged as described below.

(1) By stress concentration caused by bending, a crack occurs on a surface of a composite material composing the airfoil body 121. Additionally, in a case in which the composite material composing the airfoil body 121 is composed of a plurality of layers laminated in the thickness direction of the airfoil body 121, a delamination (phenomenon in which adjacent layers are peeled from each other) occurs.

(2) A surface on a side on which the foreign object collides in the airfoil body 121 (pressure side 121P) temporarily becomes a convex surface in the vicinity of the clearance G due to the caused bending deformation, as illustrated in FIG. 4B. Consequently, portions bonded to the pressure side 121P of the airfoil body 121 in one of or both the sheath 122 and the guard 123 are peeled into a raised state from the pressure side 121P of the airfoil body 121.

In a case in which the damage of (1) occurs, the strength of the airfoil body is significantly reduced, and in a case in which the damage of (2) occurs, aerodynamic performance of the airfoil body significantly deteriorates by the change of the profile (sectional shape). Both the above cases are not preferable.

In a case in which the clearance G exists between the rear end of the sheath 122 and the front end of the guard 123, the profile of the airfoil of the fan blade 120 has a discontinuous recessed part at a portion of the clearance G. This causes a deteriorated aerodynamic performance of the airfoil even in a state in which the above damage does not occur.

Thus, the surface of the airfoil body 121 made of a composite material is bulged in such a manner as to fill up the clearance G, so that the recessed part causing the deteriorated aerodynamic performance can be eliminated, as illustrated in FIG. 4C. Reference numeral 124 in the figure denotes an adhesive layer for bonding the sheath 122 and the guard 123 to the airfoil body 121. However, in such an airfoil body 121, in the bulged portion, reinforcement fibers (illustrated by a broken line in the figure) composing the composite material partially bents. As a result, the strength of the airfoil body 121 is reduced, and therefore this method is not preferable. As a method for eliminating the recessed part causing the deteriorated aerodynamic performance without causing such strength reduction, there is a method of filling the clearance G with an adhesive as illustrated in FIG. 4D. However, the rigidity and the strength of the adhesive filling the clearance G are significantly lower than those of the airfoil body made of a composite material, and those of the sheath and the guard made of metal, and therefore there is no effect of preventing damage due to the partial bending caused at discontinuous portions of the sheath and the guard due to collision with a foreign object.

The present disclosure has been made in order to solve the above problems, and an object of the present disclosure is to provide a fan blade that is made of a composite material, and is not damaged even in a case of collision with a large foreign object.

**Means for solving the Problems**

In order to solve the above problems, a fan blade including the features of appended claim 1 is proposed

**Advantageous Effects of the Invention**

According to the present disclosure, it is possible to obtain an excellent effect capable of improving the wear resistance and the shock resistance of a fan blade made of a composite material while minimizing the loss of aerodynamic performance, and capable of preventing occurrence of damage even in a case in which a large foreign object collides with the fan blade.

**Brief Description of the Drawings**

FIG. 1 is a schematic side sectional view of a turbofan engine including fan blades.
FIG. 2A is an overall perspective view of a fan blade made of a composite material of the present disclosure.
FIG. 2B is a sectional view (A-A cross-section in FIG. 2A) of the fan blade made of a composite material of the present disclosure.
FIG. 3 is an enlarged view of an IF part in FIG. 2B, illustrating relation between a rear end part of a sheath and a front end part of a guard in the fan blade made of a composite material of the present disclosure.

FIG. 4A is an overall perspective view of a conventional fan blade made of a composite material.

FIG. 4B is a sectional view (A-A cross-section in FIG. 4A) of the conventional fan blade made of a composite material.

FIG. 4C is an enlarged view illustrating a portion of a clearance between a rear end part of a sheath and a front end part of a guard, in the sectional view of the conventional fan blade made of a composite material (A-A cross-section in FIG. 4A), and illustrates a method for eliminating a recessed part of a profile of an airfoil of the fan blade caused by the clearance.

FIG. 4D is an enlarged view illustrating a portion of a clearance between the rear end part of the sheath and the front end part of the guard, in the sectional view of the conventional fan blade made of a composite material (A-A cross-section in FIG. 4A), and illustrates another method for eliminating a recessed part of a profile of an airfoil of the fan blade caused by the clearance.

**Mode for carrying out the Invention**

Hereinafter, an embodiment of the present disclosure will be described in detail with reference to the drawings.

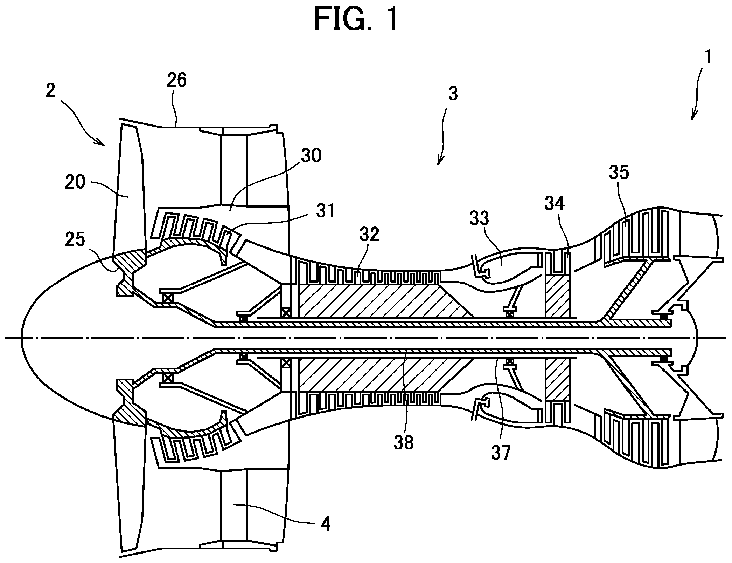

FIG. 1 is a schematic side sectional view of a general turbofan engine including fan blades.

A turbofan engine 1 is composed of a fan 2 that generates most of thrust, and a core engine 3 disposed coaxially with the fan 2 behind the fan 2, and including a turbine for driving the fan 2.

The core engine 3 is composed as a turbojet engine in which a low pressure compressor 31, a high pressure compressor 32, a combustor 33, a high pressure turbine 34, and a low pressure turbine 35 are disposed in order form an upstream side toward a downstream side. The high pressure turbine 34 is connected to the high pressure compressor 32 through a high pressure shaft 37, and the low pressure turbine 35 is connected to the low pressure compressor 31 and the fan 2 through a low pressure shaft 38.

The fan 2 includes a substantially cylindrical fan case 26, a fan disk 25 formed to rotate inside the fan case 26, and a plurality of fan blades 20 mounted on a circumference of the fan disk 25 at distances in the circumferential direction. The fan case 26 is mounted on a casing 30 of the core engine 3 through a plurality of struts (supports) 4 disposed at distances in the circumferential direction. The fan disk 25 is rotationally driven by the low pressure turbine 35 connected through the low pressure shaft 38.

FIG. 2A is an overall perspective view of the fan blade 20 of the present disclosure, and FIG. 2B is an A-A sectional view in FIG. 2A.

Each fan blade 20 of the present disclosure is composed of an airfoil body 21 made of a composite material, a sheath 22 made of metal that covers a leading edge part LE of the airfoil body 21, and a guard 23 made of metal that covers a trailing edge part TE of the airfoil body 21.

Each fan blade 20 can be divided into an airfoil 20A and a blade root 20R in view of a function. The blade root 20R is a base end portion of the airfoil body 21, and this portion is fitted into each of grooves (not illustrated) provided on a circumference of the fan disk 25 at distances in the circumferential direction, so that the fan blades 20 are mounted on the fan disk 25. The airfoil 20A is a portion except the blade root 20R in the fan blade 20, is composed of the airfoil body 21, the sheath 22, and the guard 23 as described above, and exerts an aerodynamic function.

As the composite material composing the airfoil body 21, FRP (Fiber Reinforced Plastics) composed of thermoplastic resin or thermosetting resin and reinforcement fibers is used.

The thermoplastic resin is a resin having a property of softening by heating to exert plasticity, and solidifying by cooling. Examples of thermoplastic resin used in the fan blades 20 of the present disclosure include polyethylene resin, polypropylene resin, polystyrene resin, ABS resin, vinyl chloride resin, methyl methacrylate resin, nylon resin, fluorocarbon resin, polycarbonate resin, and polyester resin.

The thermosetting resin is a resin having a property of curing by heating. Examples of thermosetting resin used in the fan blades 20 of the present disclosure include epoxy resin, phenol resin, and polyimide resin.

Examples of the reinforcement fiber used in the fan blades 20 of the present disclosure include carbon fiber, aramid fiber, and glass fiber.

The airfoil body 21 is manufactured by laminating a plurality of sheet-like prepregs obtained by impregnating thermoplastic resin with reinforcement fibers, and preforming press-molding so as to obtain a final shape under a heating state, for example. Alternatively, the airfoil body 21 may be manufactured by laminating a plurality of sheet-like prepregs obtained by impregnating thermosetting resin with reinforcement fibers so as to obtain a final shape, and thereafter curing resin under a heating state.

The sheath 22 is made of metal such as titanium alloy, and has a structure in which a base part 22B, and a pressure side protective wall 22P and a suction side protective wall 22S that protrude from the base part 22B are integrated as illustrated in FIG. 2B.

The pressure side protective wall 22P and the suction side protective wall 22S face each other with a recessed part 22R therebetween, and the recessed part 22R is formed to receive a leading portion of the airfoil body 21 including the leading edge part LE. A pressure side 21P of the airfoil body 21 and the pressure side protective wall 22P, and a suction side 21S of the airfoil body 21 and the suction side protective wall 22S are each bonded by an adhesive layer 24 such as an epoxy-based adhesive.

The sheath 22 covers the leading edge part LE of the airfoil body 21 in almost the entire region from a blade root H to a blade tip T in the height direction of the airfoil body 21. Consequently, even in a case in which a foreign object such as sand grains and a small stone is mixed in air sucked by the fan 2, the leading edge part LE of the airfoil body 21 can be prevented from being damaged due to collision with the foreign object.

A range of the airfoil body 21 covered with the sheath 22 can be suitably selected. For example, the pressure side protective wall 22P and the suction side protective wall 22S may extend rearward, so that the blade tip T is also covered. Consequently, even in a case in which contact with an inner circumferential surface of the fan case 26 occurs, excessive wear can be prevented from occurring in the blade tip T.

The guard 23 is made of metal such as titanium alloy, and is composed of a pressure side protective wall 23P and a suction side protective wall 23S as illustrated in FIG. 2A and FIG. 2B. The pressure side protective wall 23P and the suction side protective wall 23S may be integrally connected in a part of or over a whole of the rear end in the height direction. As a connecting method, the pressure side protective wall 23P and the suction side protective wall 23S are individually molded and then bonded by welding, brazing or the like, or may be integrally molded by plastic working or the like from a single material.

The pressure side protective wall 23P and the suction side protective wall 23S face each other with a recessed part 23R therebetween, and the recessed part 23R is formed to receive a tailing portion of the airfoil body 21 including the trailing edge part TE. The pressure side 21P of the airfoil body 21 and the pressure side protective wall 23P, and the suction side 21S of the airfoil body 21 and the suction side protective wall 23S are each bonded by the adhesive layer 24 such as an epoxy-based adhesive.

The guard 23 covers the trailing edge part TE of the airfoil body 21 in almost the entire region from the blade root H to the blade tip T in the height direction of the airfoil body 21. Consequently, even in a case in which a large foreign object B such as a bird collides with the airfoil 20A of the fan blades 20, it is possible to suppress distortion generated on a surface of the trailing edge part TE of the airfoil body 21 with deformation caused by this collision, and to prevent occurrence of a crack or peeling.

A region of the airfoil body 21 covered with the guard 23 can be suitably selected. For example, deformation behavior of the airfoil part 20A of the fan blades 20 at the time of collision with the large foreign object B is obtained by analysis, and a region including a portion where large distortion exceeding a tolerance is expected to occur may be covered with the guard 23.

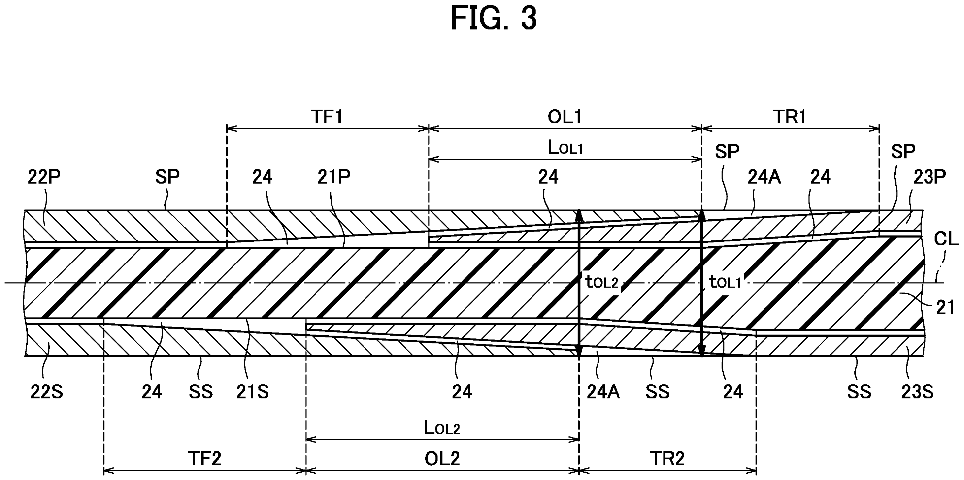

Now, a configuration of an interface part between a rear end part of the sheath 22 (rear end and a portion in the vicinity thereof) and a front end part of the guard 23 (front end and a portion in the vicinity thereof) will be described with reference to FIG. 3 being an enlarged view of the IF part in FIG. 2B. This configuration is similar on either a pressure surface side or a suction surface side of the airfoil body 21, and therefore in the following description, overlapped description is omitted by writing description regarding the suction surface side in parentheses.

As illustrated in FIG. 3, the rear end part of the pressure side protective wall 22P (suction side protective wall 22S) of the sheath 22, and the front end part of the pressure side protective wall 23P (suction side protective wall 23S) of the guard 23 overlap in the thickness direction of the airfoil body 21 in such a manner that the latter is interposed between the former and the pressure side 21P (suction side 21S) of the airfoil body 21, so that an overlap section OL1 (OL2) is formed.

A front transition section TF1 (TF2), and a rear transition section TR1 (TR2) are formed in front of and behind the overlap section OL1 (OL2), respectively.

In the rear transition section TR1 (TR2), the thickness of the airfoil body 21 continuously reduces toward the front side on the side of the pressure side 21P (suction side 21S) with respect to a camber line (a center line of a profile of the airfoil) CL in the profile (sectional shape) of the airfoil 20A determined by aerodynamic design. With this, an outer surface of the pressure side protective wall 23P (suction side protective wall 23S) of the guard 23 deviates to the camber line CL of the airfoil 20A gradually forward. Consequently, a space is secured between a pressure side SP (suction side SS) in the profile of the airfoil 20A, and the outer surface of the pressure side protective wall 23P (suction side protective wall 23S) of the guard 23, the rear end part of the pressure side protective wall 22P (suction side protective wall 22S) of the sheath 22 can be received in the overlap section OL1 (OL2).

With the above deviation of the pressure side protective wall 23P (suction side protective wall 23S) of the guard 23, the recessed part formed behind the rear end of the pressure side protective wall 22P (suction side protective wall 22S) of the sheath 22, and formed outside the pressure side protective wall 23P (suction side protective wall 23S) of the guard 23 is filled with an additional adhesive layer 24A. Consequently, the pressure side SP (suction side SS) of the airfoil 20A on a front side and a rear side of the rear transition section TR1 (TR2) is smoothly connected by an outer surface of the filled additional adhesive layer 24A.

On the front side of the rear transition section TR1 (TR2), namely, in the overlap section OL1 (OL2) and the front transition section TF1 (TF2), the pressure side SP (suction side SS) of the airfoil 20A is formed by an outer surface of the pressure side protective wall 22P (suction side protective wall 22S) of the sheath 22. Additionally, on the rear side of the rear transition section TR1 (TR2), the pressure side SP (suction side SS) of the airfoil 20A is formed by the outer surface of the pressure side protective wall 23P (suction side protective wall 23S) of the guard 23. In the overlap section OL1 (OL2), an inner surface of the pressure side protective wall 22P (suction side protective wall 22S) of the sheath 22, and the outer surface of the pressure side protective wall 23P (suction side protective wall 23S) of the guard 23 are bonded to each other through the adhesive layer 24

The thickness of the pressure side protective wall 23P (suction side protective wall 23S) of the guard 23 is kept constant in the rear transition section TR1 (TR2) and the rear side thereof, but continuously reduces toward the front side in the overlap section OL1 (OL2).

The thickness of the pressure side protective wall 22P (suction side protective wall 22S) of the sheath 22 continuously reduces toward the rear side in the front transition section TF1 (TF2) and the overlap section OL1 (OL2), in other words, continuously increases toward the front side.

Thus, in the overlap section OL1 (OL2), the thickness of the pressure side protective wall 23P (suction side protective wall 23S) of the guard 23 continuously reduces toward the front side, and the thickness of the pressure side protective wall 22P (suction side protective wall 22S) of the sheath 22 continuously increases toward the front side. Thus, when the thickness of a wall that protects the pressure side 21P (suction side 21S) of the airfoil body 21, namely, the entire thickness of the pressure side protective wall 22P (suction side protective wall 22S) of the sheath 22 and the pressure side protective wall 23P (suction side protective wall 23S) of the guard 23 is kept substantially constant in the overlap section OL1 (OL2), the thickness of the airfoil body 21 continuously reduces toward the front side, and therefore it is possible to avoid occurrence of partial bending in the reinforcement fibers of the composite material composing the airfoil body 21, and to prevent reduction of the strength of the airfoil body 21. However, the thickness of the wall that protects the pressure side 21P (suction side 21S) of the airfoil body 21 is not necessarily substantially constant, and the respective thicknesses of the pressure side protective wall 22P (suction side protective wall 22S) of the sheath 22 and the pressure side protective wall 23P (suction side protective wall 23S) of the guard 23 can be suitably selected within such a range that the partial bending does not occur in the reinforcement fibers of the composite material composing the airfoil body 21.

The thickness of the pressure side protective wall 23P (suction side protective wall 23S) of the guard 23 in the overlap section OL1 (OL2) may be kept the same as those in the rear transition section TR1 (TR2) and the rear side thereof. In this case, as described above, the thickness of the pressure side protective wall 22P (suction side protective wall 22S) of the sheath 22 continuously increases toward the front side, and therefore the thickness of the wall that protects the pressure side 21P (suction side 21S) of the airfoil body 21, namely, the entire thickness of the pressure side protective wall 22P (suction side protective wall 22S) of the sheath 22 and the pressure side protective wall 23P (suction side protective wall 23S) of the guard 23 continuously increases toward the front side. Consequently, the leading edge part LE of the airfoil body 21 that is highly likely to collide with the foreign object can be more effectively protected from damage.

In the front transition section TF1 (TF2), the thickness of the adhesive layer 24 is changed in the front and rear direction with respect to the shape of the airfoil body 21 determined so as not to cause partially bending of the reinforcement fibers of the composite material, so that the change of the thickness of the pressure side protective wall 22P (suction side protective wall 22S) of the sheath 22 in the front and rear direction is compensated.

In order to ensure shock resistance of the fan blade 20, (Formula 1) or (Formula 2) described below is preferably satisfied:

(1) Where the length in the front and rear direction of the overlap section OL1 is denoted by $L_{OL1}$, and the thickness of the fan blade 20 at the rear end of the overlap section OL1 (refer to FIG. 3) is denoted by $t_{OL1}$,

$$L_{OL1} \geq t_{OL1} \qquad \text{(Formula 1)}$$

(2) Where the length in the front and rear direction of the overlap section OL2 is denoted by $L_{OL2}$, and the thickness of the fan blade 20 at the rear end of the overlap section OL2 (refer to FIG. 3) is denoted by $t_{OL2}$,

$$L_{OL2} \geq t_{OL2} \qquad \text{(Formula 2)}$$

In an example, the thickness of the pressure side protective wall 22P (suction side protective wall 22S) of the sheath 22 at the front end of the front transition section TF1 (TF2) is 1.2 mm, the thickness of the pressure side protective wall 22P (suction side protective wall 22S) of the sheath 22 at the rear end of the overlap section OL1 (OL2) is 0.2 mm, and the thickness of the pressure side protective wall 22P (suction side protective wall 22S) of the sheath 22 continuously changes between these. Additionally, the thickness of the pressure side protective wall 23P (suction side protective wall 23S) of the guard 23 on the rear side with respect to the rear end of the overlap section OL1 (OL2) is 0.5 mm (constant), and the thickness of the pressure side protective wall 23P (suction side protective wall 23S) of the guard 23 at the front end of the overlap section OL1 (OL2) is 0.2 mm. However, these thicknesses can be each suitably selected.

As described above, in the fan blade 20 of the present disclosure, the rear end part of the sheath 22 that covers the front side of the airfoil body 21, and the front end part of the guard 23 that covers the rear side of the airfoil body 21 overlap in the thickness direction of the airfoil body 21. In other words, the airfoil body 21 made of a composite material is covered with the sheath 22 made of metal and the guard 23 made of metal over the entire region in the front and rear direction.

Therefore, even in a case in which the large foreign object B such as a bird collides with the fan blade, the airfoil body 21 deforms in a smoothly curved manner without bending, and therefore stress concentration does not occur in the airfoil body 21, and any crack does not occur on the surface of the composite material composing the airfoil body 21. Particularly, in a case in which the composite material composing the airfoil body 21 is composed of a plurality of layers laminated in the thickness direction of the airfoil body 21, there is a possibility that a delamination occurs in the conventional fan blade made of a composite material. However, such a possibility can be eliminated in the fan blade 20 of the present disclosure. Additionally, even in a case in which the pressure side 21P of the airfoil body 21 temporarily becomes a convex surface by bending deformation caused by collision with a foreign object, the front end part of the guard 23 is covered with the rear end part of the sheath 22, and therefore the front end part of the guard 23 is not brought into a state of peeling from the pressure side 21P of the airfoil body 21 to rise.

Thus, in the fan blade 20 of the present disclosure, even in a case in which the large foreign object B such as a bird collides, a crack or a delamination does not occur in the airfoil body 21, or damage such as peeling of the sheath 22 or the guard 23 does not occur. In other words, the fan blade 20 of the present disclosure can withstand large load compared to the conventional fan blade made of a composite material until damage is caused.

This is confirmed through a static load test using a test piece obtained by simulating a configuration of the interface part of the rear end part of the sheath 22 and the front end part of the guard 23 in the fan blade 20 of the present disclosure.

Furthermore, in the fan blade 20 of the present disclosure, the recessed part generated with overlapping of the rear end part of the sheath 22 and the front end part of the guard 23 in the thickness direction of the airfoil body 21 is filled with the additional adhesive layer 24A, and therefore it is possible to minimize the loss of aerodynamic performance.

As described above, according to the present disclosure, it is possible to improve the wear resistance and the shock resistance of the fan blade made of a composite material while minimizing the loss of aerodynamic performance, and to prevent occurrence of damage even in a case in which a large foreign object collides with the fan blade.

(Aspects of Present Disclosure)

According to an aspect, the present invention provides a fan blade according to claim 1. Further aspects of the present invention are set forth in the dependent claims, the drawings and the above description of embodiments.

**Explanation of Reference Signs**

| | |
|---|---|
| 20 | fan blade |
| 21 | airfoil body |
| 22 | sheath |
| 23 | guard |
| 24 | adhesive layer |
| 24A | additional adhesive layer |
| CL | camber line |
| LE | leading edge part (of airfoil body) |
| TE | trailing edge part (of airfoil body) |
| SP | pressure side (of airfoil body) |
| SS | suction side (of airfoil body) |
| OL1, OL2 | overlap section |
| TR1, TR2 | rear transition section (transition section) |

**Claims**

1. A fan blade (20) comprising:

an airfoil body (21) composed of a composite material of thermoplastic resin or thermosetting resin, and reinforcement fibers; a sheath (22) made of metal that covers at least a part of a leading edge part (LE) of the airfoil body (21); and a guard (23) made of metal that covers at least a part of a trailing edge part (TE) of the airfoil body (21), wherein a rear end part of the sheath (22) and a front end part of the guard (23) overlap in a thickness direction of the airfoil body (21), and the front end part of the guard (23) is interposed between the rear end part of the sheath (22) and the airfoil body (21) in the overlapped section (OL1, OL2), wherein in a transition section (TR1, TR2) on a rear side of the overlapped section (OL1, OL2), a thickness of the airfoil body (21) continuously reduces toward a front side on either side of the pressure side (SP) and the suction side (SS) with respect to a camber line (SL) of an airfoil (20A) of the fan blade (20), and the sheath (22) and the airfoil body (21), the guard (23) and the airfoil body (21), and the sheath (22) and the guard (23) in the overlapped section (OL1, OL2) are each bonded by an adhesive layer (24),
**characterized in that**:

the rear end part of the sheath (22) and the front end part of the guard (23) overlap in the thickness direction of the airfoil body (21) on each surface of a pressure side (SP) and a suction side (SS) of the airfoil body (21); and

an additional adhesive layer (24A) is disposed outside the guard (23) in the transition section (TR1, TR2).

2. The fan blade (20) according to claim 1, wherein in the overlapped section (OL1, OL2), a thickness of the sheath (22) continuously reduces toward a rear side, and a thickness of the guard (23) continuously reduces toward a front side.

3. The fan blade (20) according to claim 1 or 2, satisfying following (1) or (2):

(1) a length ($L_{OL1}$) in a front and rear direction of the overlapped section (OL1) of the rear end part of the sheath and the front end part of the guard (23) on the pressure side (SP) is equal to or larger than a thickness ($t_{OL1}$) of the fan blade (20) at a rear end of the overlapped section (OL1); and

(2) a length ($L_{OL2}$) in a front and rear direction of the overlapped section (OL2) of the rear end part of the sheath and the front end part of the guard (23) on the suction side (SS) is equal to or larger than a thickness ($t_{OL2}$) of the fan blade (20) at a rear end of the overlapped section (OL2).

**Patentansprüche**

1. Gebläseschaufel (20) umfassend:

einen Profilkörper (21), der aus einem Verbundmaterial aus thermoplastischem Harz oder wärmehärtbarem Harz und Verstärkungsfasern besteht;

eine Umhüllung (22), die aus Metall hergestellt ist und mindestens einen Teil eines Vorderkantenteils (LE) des Profilkörpers (21) abdeckt; und

einen Schutz (23), der aus Metall hergestellt ist und mindestens einen Teil eines Hinterkantenteils (TE) des Profilkörpers (21) abdeckt, wobei sich ein hinterer Endteil der Umhüllung (22) und ein vorderer Endteil des Schutzes (23) in einer Dickenrichtung des Profilkörpers (21) überlappen und

der vordere Endteil des Schutzes (23) zwischen dem hinteren Endteil der Umhüllung (22) und dem Profilkörper (21) in dem Überlappungsabschnitt (OL1, OL2) angeordnet ist, wobei sich in einem Übergangsabschnitt (TR1, TR2) auf einer hinteren Seite des Überlappungsabschnitts (OL1, OL2) eine Dicke des Profilkörpers (21) in Richtung einer vorderen Seite auf jeder Seite der Druckseite (SP) und der Saugseite (SS) in Bezug auf eine Wölbungslinie (SL) eines Profils (20A) der Gebläseschaufel (20) kontinuierlich reduziert und

die Umhüllung (22) und der Profilkörper (21), der Schutz (23) und der Profilkörper (21) sowie die Umhüllung (22) und der Schutz (23) in dem Überlappungsabschnitt (OL1, OL2) jeweils durch eine Haftschicht (24) verbunden sind, **dadurch gekennzeichnet, dass**:

sich der hintere Endteil der Umhüllung (22) und der vordere Endteil des Schutzes (23) in der Dickenrichtung des Profilkörpers (21) auf jeder Fläche einer Druckseite (SP) und einer Saugseite (SS) des Profilkörpers (21) überlappen; und

eine zusätzliche Haftschicht (24A) außerhalb des Schutzes (23) in dem Übergangsabschnitt (TR1, TR2) angeordnet ist.

2. Gebläseschaufel (20) nach Anspruch 1, wobei sich in dem Überlappungsabschnitt (OL1, OL2) eine Dicke der Umhüllung (22) in Richtung einer hinteren Seite kontinuierlich reduziert und eine Dicke des Schutzes (23) in Richtung einer vorderen Seite kontinuierlich reduziert.

3. Gebläseschaufel (20) nach Anspruch 1 oder 2, die das Folgende (1) oder (2) erfüllt:

(1) dass eine Länge ($L_{OL1}$) in einer vorderen und hinteren Richtung des Überlappungsabschnitts (OL1) des hinteren Endteils der Umhüllung und des vorderen Endteils des Schutzes (23) auf der Druckseite (SP) gleich oder größer als eine Dicke ($t_{OL1}$) der Gebläseschaufel (20) an einem hinteren Ende des Überlappungsabschnitts (OL1) ist; und

(2) eine Länge ($L_{OL2}$) in einer vorderen und hinteren Richtung des Überlappungsabschnitts (OL2) des hinteren Endteils der Umhüllung und des vorderen Endteils des Schutzes (23) auf der Saugseite (SS) gleich oder größer als eine Dicke ($t_{OL2}$) der Gebläseschaufel (20) an einem hinteren Ende des Überlappungsabschnitts (OL2) ist.

**Revendications**

1. Pale de soufflante (20) comprenant :

un corps d'aile portante (21) composé de matériau composite de résine thermoplastique ou de résine thermodurcissable et des fibres de renfort ;

une gaine (22) faite de métal qui couvre au moins une partie d'une pièce de bord d'attaque (LE) du corps d'aile portante (21) ; et

une barrière (23) faite de métal qui couvre au moins une partie d'une pièce de bord de fuite (TE) du corps d'aile portante (21), dans laquelle une partie d'extrémité arrière de la gaine (22) et une partie d'extrémité avant de la barrière (23) se chevauchent dans une direction d'épaisseur du corps d'aile portante (21), et

la partie d'extrémité avant de la barrière (23) est intercalée entre la partie d'extrémité arrière de la gaine (22) et le corps d'aile portante (21) dans la section qui se chevauche (OL1, OL2), dans laquelle

dans une section de transition (TR1, TR2) sur un côté arrière de la section qui se chevauche (OL1, OL2), une épaisseur du corps d'aile portante (21) réduit en continu vers une face avant de chaque côté du côté pression (SP) et du côté aspiration (SS) par rapport à une ligne de cambrure (SL) d'une aile portante (20A) de la pale de soufflante (20), et

la gaine (22) et le corps d'aile portante (21), la barrière (23) et le corps d'aile portante (21), et la gaine (22) et la barrière (23) dans la section qui se chevauche (OL1, OL2) sont chacun liés par une couche d'adhésif (24),

**caractérisé en ce que** :

la partie d'extrémité arrière de la gaine (22) et la partie d'extrémité avant de la barrière (23) se chevauchent dans la direction d'épaisseur du corps d'aile portante (21) sur chaque surface d'un côté pression (SP) et d'un côté aspiration (SS) du corps d'aile portante (21) ; et

une couche d'adhésif supplémentaire (24A) est disposée hors de la barrière (23) dans la section de transition (TR1, TR2).

2. Pale de soufflante (20) selon la revendication 1, dans laquelle

dans la section qui se chevauche (OL1, OL2), une épaisseur de la gaine (22) réduit en continu vers une face arrière, et une épaisseur de la barrière (23) réduit en continu vers une face avant.

3. Pale de soufflante (20) selon la revendication 1 ou 2, satisfaisant ce qui suit (1) ou (2) :

(1) une longueur ($L_{OL1}$) dans une direction avant et arrière de la section qui se chevauche (OL1) de la partie d'extrémité arrière de la gaine et la partie d'extrémité avant de la barrière (23) sur le côté pression (SP) est supérieure ou égale à une épaisseur ($t_{OL1}$) de la pale de soufflante (20) à une extrémité arrière de la section qui se chevauche (OL1) ; et

(2) une longueur ($L_{OL2}$) dans une direction avant et arrière de la section qui se chevauche (OL2) de la partie d'extrémité arrière de la gaine et la partie d'extrémité avant de la barrière (23) sur le côté aspiration (SS) est supérieure ou égale à une épaisseur ($t_{OL2}$) de la pale de soufflante (20) à une extrémité arrière de la section qui se chevauche (OL2).

# FIG. 1

EP 3 581 764 B1



# FIG. 2A

# FIG. 2B

FIG. 3

# FIG. 4A

120

A

G

A

B

122

123

121

TE

LE

# FIG. 4B

F

(BEFORE DEFORMATION)

G

121

121P

(AFTER DEFORMATION)

123

LE

122

# FIG. 4C

122   124   124   121   123

# FIG. 4D

122   124   121   123

**EP 3 581 764 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7780410 B
- EP 1302562 A1
- WO 2014143265 A1
- US 2014093367 A1
- US 2016201482 A1